Europäisches Patentamt

European Patent Office

Office européen des brevets

(19)

(11) **EP 0 902 862 B1**

(12) **EUROPÄISCHE PATENTSCHRIFT**

(45) Veröffentlichungstag und Bekanntmachung des Hinweises auf die Patenterteilung:
**15.11.2000 Patentblatt 2000/46**

(21) Anmeldenummer: **97923040.6**

(22) Anmeldetag: **09.05.1997**

(51) Int Cl.⁷: **F02B 27/02**, F02M 35/10,
F02D 17/02

(86) Internationale Anmeldenummer:
**PCT/EP97/02384**

(87) Internationale Veröffentlichungsnummer:
**WO 97/46797 (11.12.1997 Gazette 1997/53)**

(54) **LUFTDURCHSTRÖMUNGSVORRICHTUNG**

AIRFLOW DEVICE

DISPOSITIF DE CIRCULATION D'AIR

(84) Benannte Vertragsstaaten:
**DE ES FR GB IT**

(30) Priorität: **03.06.1996 DE 19622235**
**01.08.1996 DE 19631036**

(43) Veröffentlichungstag der Anmeldung:
**24.03.1999 Patentblatt 1999/12**

(73) Patentinhaber: **FILTERWERK MANN & HUMMEL GMBH**
**71631 Ludwigsburg (DE)**

(72) Erfinder: **FÜSSER, Rolf**
**D-76332 Bad Herrenalb (DE)**

(74) Vertreter: **Voth, Gerhard, Dipl.-Ing.**
**FILTERWERK MANN + HUMMEL GMBH**
**Postfach 4 09**
**71631 Ludwigsburg (DE)**

(56) Entgegenhaltungen:
**DE-A- 3 814 836          US-A- 4 858 568**

• **PATENT ABSTRACTS OF JAPAN vol. 95, no. 2 (M-000), 31.März 1995 & JP 06 330756 A (ISUZU MOTORS LTD), 29.November 1994,**
• **PATENT ABSTRACTS OF JAPAN vol. 7, no. 95 (M-209), 21.April 1983 & JP 58 018533 A (NISSAN JIDOSHA KK), 3.Februar 1983,**
• **PATENT ABSTRACTS OF JAPAN vol. 13, no. 202 (M-824), 12.Mai 1989 & JP 01 024114 A (NIPPON DENSO CO LTD), 26.Januar 1989,**

**Beschreibung**

Stand der Technik

Die Erfindung betrifft eine Luftdurchströmungsvorrichtung für ein Aggregat, beispielsweise einen Verbrennungsmotor, das für seine Funktion eine vorgegebene Menge Luft benötigt, nach dem Oberbegriff des Anspruchs 1 und des nebengeordneten Anspruchs 6.

Beispielsweise werden bei bekannten Verbrennungsmotoren für Kraftfahrzeuge zur Erzielung eines optimalen Betriebsverhaltens Ansaugsysteme bevorzugt, die veränderbare Ansaugstrecken aufweisen und somit eine Anpassung an unterschiedliche Anforderungen des Motorbetriebs gestatten. Auch die Geräuschdämpfung spielt hier eine große Rolle.

Es ist beispielsweise eine Ansaugvorrichtung für einen Verbrennungsmotor aus der DE-OS 40 41 786 bekannt, bei der zur Variierung der Durchtrittsöffnung, durch die die angesaugte Luft strömt, ein steuerbares Absperrorgan vorhanden ist. Das Absperrorgan befindet sich in einem zwischen zwei Ansaugkanälen befindlichen Querkanal und wird durch Steuerbefehle einer Steuerelektronik geöffnet oder geschlossen. Die Steuerbefehle sind abhängig von der Drehzahl des Verbrennungsmotors und von der Temperatur der Außenluft, die mit einem Temperaturfühler ermittelt wird.

Um eine Verbesserung des Wirkungsgrades bei der Energieumsetzung eines Verbrennungsmotors für einen Betriebsbereich weit unter der Motor-Nennleistung und damit eine Verminderung des fahrwegbezogenen Kraftstoffverbrauches zu erreichen wird häufig eine selektive Abschaltung von Zylindern an den Verbrennungsmotoren vorgenommen. Zur Steuerung des Motordrehmoments kann neben der üblichen Drosselklappenverstellung auch die Zahl der aktiven Zylinder vermindert werden. Die zum Drehmoment nicht beitragenden Zylinder laufen mechanisch mit, werden aber nicht mit Kraftstoff versorgt. Bei dieser Zylinderabschaltung ändert sich jedoch auch die Pulsation der angesaugten Luft.

Eine typische Anwendung dieser Zylinderabschaltung ist die Umschaltung eines 6-Zylinder-Verbrennungsmotors von einem 6-Zylinder- auf einen 3-Zylinder-Betrieb. Obwohl der von jedem dieser Zylinder ausgehende Saugpuls in der Ansaugvorrichtung für sich gesehen unverändert bleibt, ergibt das zyklische Zusammenspiel von 6 Zylindern einen anderen Pulsationsverlauf als den von 3 Zylindern. Insbesondere tiefe Brummtöne sind hier störend; diese Tieftonanteile können mit Rücksicht auf den Bauraum in einem Kraftfahrzeug sonst nur durch aufwendige Reflexions-Schalldämpfer (z.B. Helmholtz-Resonatoren) vermindert werden.

Aber auch für viele andere Anwendungsfälle spielt das Resonanzverhalten der Ansaugvorrichtung eine große Rolle, wobei auch häufig der zur Verfügung stehende Raum eine kritische Größe darstellt.

Die US-A-4 858 568 beschreibt eine Ansauganlage einer Brennkraftmaschine, mit zwei Ansaugkanälen unterschiedlicher Länge, wobei der kürzere Ansaugkanal eine größere und der längere Ansaugkanal eine kleinere Querschnittsfläche aufweist. Die Ansaugkanäle werden mittels einer Stellvorrichtung geöffnet bzw. geschlossen, wodurch der Luftstrom entsprechend der Schaltstellung der Stellvorrichtung umgelenkt wird. Wenn der kürzere Ansaugkanal geschaltet ist, wird der längere Ansaugkanal von der Stellvorrichtung versperrt und somit nicht durchströmt. Ist der längere Ansaugkanal geschaltet, so ist der kürzere Ansaugkanal nicht durchströmt. Da immer nur ein Ansaugkanal durchströmt wird, nimmt der andere Ansaugkanal wertvollen Bauraum ein, der für andere Bauteile verwendet werden könnte.

Aufgabenstellung

Der Erfindung liegt die Aufgabe zugrunde, eine Luftdurchströmungsvorrichtung nach dem Oberbegriff des Anspruchs 1 und des nebengeordneten Anspruchs 6 auf einfache Weise so fortzubilden, dass für unterschiedliche Betriebszustände des angeschlossenen Aggregats optimale Betriebs- und insbesondere Geräuschverhältnisse vorliegen.

Vorteile der Erfindung

Die erfindungsgemäße Luftdurchströmungsvorrichtung löst die gestellte Aufgabe mit den im Kennzeichen des Anspruchs 1 und des nebengeordneten Anspruchs 6 angegebenen Merkmalen. Vorteilhaft ist die erfindungsgemäße Luftdurchströmungsvorrichtung insbesondere dadurch, dass durch die Veränderung des Ansaugweges und der Ansauggeometrie eine Anpassung an unterschiedliche Betriebszustände, beispielsweise bei veränderten Zylinderzahlen eines Verbrennungsmotors, insbesondere hinsichtlich der Optimierung der Geräuschemission, vorgenommen werden kann.

Die Erfindung beschreibt ein flexibles System zum Ansaugen unterschiedlicher Luftmengen, insbesondere bei pulsierenden Strömungsverhältnissen. Mit zwei Stellvorrichtungen gemäß Anspruch 1 kann in vorteilhafter Weise eine Umschaltung der dazwischen liegenden Strömungswege, bzw. Schallausbreitungswege über mindestens drei Strömungskanäle, beispielsweise aus flexiblen Schläuchen, vorgenommen werden. Jeweils eine Klappe in jeder Stellvorrichtung kann bei der erfindungsgemäßen Ausführungsform zwei Schaltstellungen einnehmen, mit denen durch Umlenkung des Luftstromes entweder ein langer schmaler oder ein kurzer breiter Strömungsweg, bzw. Schallausbreitungsweg geschaffen werden kann.

Eine Luftdurchströmungsvorrichtung enthält eintrittsseitig in der Regel einen Luftfilter mit einem Ansaugschnorchel. Diese Teile bilden einen in Reihe geschlossenen Helmholtz-Resonator, dessen Resonanzfrequenz sich aus folgender Formel ergibt:

$$f_{res}=340/2\pi * \sqrt{A/l*V}$$

$f_{res}$ = Resonanzfrequenz,

A = Querschnitt des resultierenden Strömungskanals,

l = Länge des resultierenden Strömungskanals,

V = Volumen des nachgeschalteten Luftfilters.

Es ergibt sich somit durch eine Querschnittserweiterung bei paralleler Öffnung der drei Strömungskanäle eine Verdreifachung der Resonanzfrequenz und bei einer Längenerweiterung bei Hintereinanderschaltung der drei Strömungskanäle eine Drittelung der Resonanzfrequenz. In einem Anwendungsfall kann beispielsweise der untere Wert bei 25Hz und der obere Wert bei 75Hz liegen. Die Schalldämpfung setzt dann bei Tönen oberhalb der Frequenz von 35 Hz bzw. 106 Hz ein

Gemäß einer Ausführungsform können die Klappenachsen der beiden Stellvorrichtungen starr miteinander gekoppelt werden, so dass sich eine einfache Anordnung zur Erzielung der oben beschriebenen Verhältnisse ergibt. Hierbei können die Stellvorrichtungen direkt neben- oder übereinander gesetzt werden, dadurch lassen sich beide Achsen der Klappe leicht miteinander verbinden und benötigen zur Betätigung nur einen Stellmotor. Zur genaueren Einstellung sind die beiden Klappen federvorgespannt.

Es ist gemäß einer weiteren Ausführungsform auch eine dritte Schaltstellung der Klappen möglich, bei der nur eine Klappe bewegt wird und somit die Klappen unterschiedliche Schaltstellungen einnehmen. Wenn beispielsweise aus der Schaltstellung mit langen und engen Strömungskanälen heraus nur eine Klappe bewegt wird, verkürzt sich die Länge des dämpfungswirksamen Strömungskanals um den Faktor 3, der Flächenquerschnitt bleibt jedoch erhalten. Die Resonanzfrequenz steigt daher um den Faktor √3 und nimmt nach dem oben beschriebenen Beispiel den Wert von 43,3Hz an, somit kann diese Zwischenstellung beispielsweise für den mittleren Drehzahlbereiche eines Verbrennungsmotors eingesetzt werden.

Die mechanische Realisierung erfolgt beim zuletzt beschriebenen Ausführungsbeispiel über einen Mitnahmenocken an einer Klappenachse, so dass über einen bestimmten Drehwinkelbereich der direkt angetriebenen Klappe die jeweils andere Klappe nicht mitgenommen wird.

Die Geräuschemissionen unterscheiden sich bei einem bevorzugten Anwendungsfall der Erfindung, nämlich beim Betrieb eines Verbrennungsmotors mit unterschiedlichen Zylinderzahlen, in diesen Betriebsphasen erheblich. Die Frequenzcharakteristik der Saugimpulse ist nicht nur von der Zylinderpulsschwingung sondern auch von den Oberwellen bestimmt; die Frequenzcharakteristik des 6-Zylinder-Motors kann im wesentlichen durch das Zusammenwirken der Sinusschwingungen der 6. und 12. Harmonischen beschrieben werden, wobei die Amplituden deutlich kleiner sind als die des Zylinderpulses. Im Gegensatz dazu schwingt der Zyklus eines 3-Zylinder-Motors fast ausschließlich mit der Sinuswelle der 3. Harmonischen und die Amplitude wächst dabei über den Wert des Einzelpulses hinaus, dies kann einen Pegelunterschied der Geräuschemission von 13dB ausmachen.

Gemäß der Erfindung kann die Geräuschemission bei einem Betrieb mit abgeschalteten Zylindern mit der Strömungsweg-Schaltstellung "lang-schmal" vorteilhaft vermindert werden. Insbesondere die im Volllastbetrieb motorakustisch sehr lauten Brummtönen, die bei den gängigen Fahrzeugtypen obendrein einen leichten Weg zum Fahrgast-Innenraum finden und resonanzverstärkt an die Ohren der Insassen gelangen könnten, werden erfolgreich unterdrückt.

Aus dem oben gesagten ergibt sich, dass zur Geräuschreduzierung neben der Größe des Volumens der Ansaugvorrichtung auch die Abmessungen des sogenannten akustischen Halses im Ansaugrohr für die Dämpfungswirkung entscheidend sind. Je enger und je länger das Rohrstück ist, desto niederfrequenter setzt die Dämpfung ein. Insbesondere auch mit der erfindungsgemäßen Ausführungsform nach den Ansprüchen 6 bis 12 kann in vorteilhafter Weise eine Verlängerung und Verengung des Ansaugweges zur besseren Dämpfung der tieferen Frequenzanteile durchgeführt werden. Mit einer einfachen mechanischen Verschiebung eines von zwei Innenrohren kann eine Umlenkung der angesaugten Luft erzwungen werden.

Weitere vorteilhafte Weiterbildungen der Erfindung sind in den Unteransprüchen angegeben.

Zeichnung

Ausführungsbeispiele der erfindungsgemäßen Luftdurchströmungsvorrichtung werden anhand der Zeichnung erläutert. Es zeigen:

Figur 1 einen Querschnitt durch ein erstes Ausführungsbeispiel mit einem Rohrstück einer Ansaugvorrichtung mit zwei Innenrohren im Ausgangszustand;

Figur 2 einen Querschnitt durch ein Rohrstück einer Ansaugvorrichtung mit zwei Innenrohren im umgeschalteten Zustand;

Figuren 3 und 4 Darstellungen des Schwingungsverhaltens eines 3-Zylinder- und eines 6-Zylinder-Motors;

Figur 5 einen Verlauf der Dämpfungswirkung eines akustischen Halses über der Frequenz bei unterschiedlicher Zylinderzahl;

Figur 6 ein weiteres bevorzugtes Ausführungsbeispiel in einer Prinzipdarstellung der Luftdurchströmungsvorrichtung mit drei schaltbaren Strömungskanälen und

Figur 7 die Stellvorrichtungen nach Figur 6 mit beweglichen Klappen an den Strömungskanälen im Detail.

Beschreibung der Ausführungsbeispiele

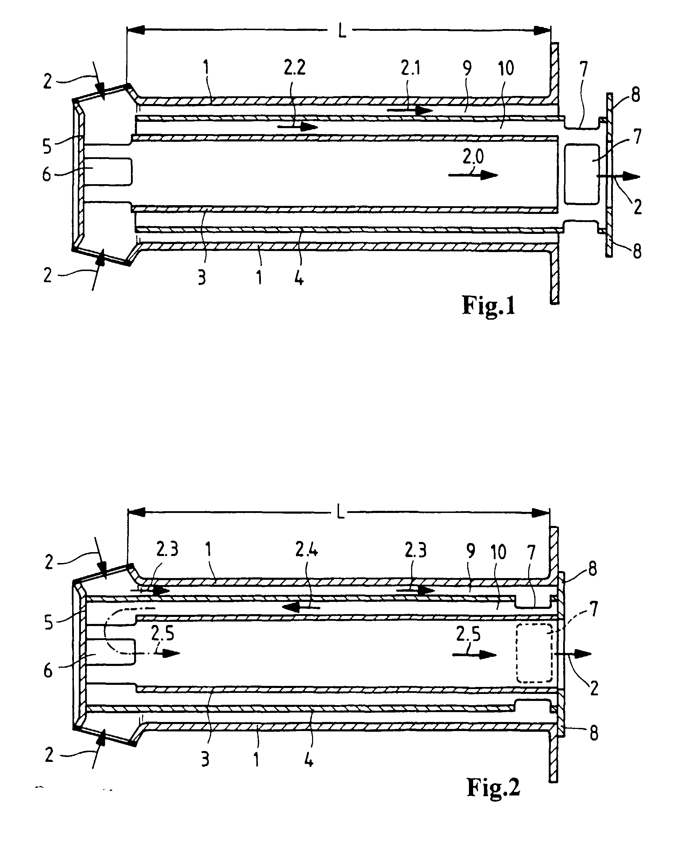

In Figur 1 ist ein erstes Ausführungsbeispiel mit einem Rohrstück 1 einer Ansaugvorrichtung für einen hier nicht dargestellten Verbrennungsmotor gezeigt, durch das ein Luftstrom gemäß der Pfeile 2, bzw. der Pfeile 2.0, 2.1 und 2.2 hindurchtritt. Im Rohrstück 1 ist konzentrisch ein mit diesem fest verbundenes erstes Innenrohr 3 angebracht. Zwischen diesem ersten Innenrohr 3 und der Innenwand des Rohrstücks 1 taucht ein axial verschiebbares zweites Innenrohr 4 ein. Das zweite Innenrohr 4 kann axial soweit verschoben werden bis es an einer Anschlagplatte 5 dichtend anliegt. Die Anschlagplatte 5 dient hier auch als Halterung für das erste Innenrohr 3.

Das erste Innenrohr 3 weist am unteren Ende an der Anschlagplatte 5 eine Anzahl Fenster 6 auf, durch die angesaugte Luft in das innere des ersten Innenrohres 3 strömen kann wenn das zweite Innenrohr 4 gemäß Figur 1 nicht heruntergeschoben ist. Am oberen Ende des verschiebbaren zweiten Innenrohres 4 befinden sich eine Anzahl Fenster 7 und eine Dichtungsscheibe 8, deren Funktionen unten anhand der Figur 2 erläutert werden. Die angesaugte Luft strömt nach Figur 1 parallel (Pfeile 2.0, 2.1 und 2.2) durch Zwischenräume 9 und 10 sowie durch das Innenrohr 3.

Bei dem beschriebenen Ausführungsbeispiel hat das bewegliche Innenrohr 4 vor einer Umschaltung vom 6-Zylinderauf den 3-Zylinder-Betrieb die Stellung gemäß Figur 1, die eine parallele Durchströmung der 3 Rohrräume gestattet. Der Strömungsweg beträgt L, der Strömungsquerschnitt hat den Wert 3*A, wobei A der Flächeninhalt des Querschnittes einer der 3 Rohrräume ist.

In Figur 2 ist das zweite Innenrohr 4 heruntergeschoben, so dass es unten an der Anschlagplatte 5 dicht anliegt. Die angesaugte Luft wird somit gezwungen durch den ersten Zwischenraum 9 zu strömen (Pfeil 2.3) und wird am rechten Ende durch die abdichtende Scheibe 8 zu den Fenstern 7 geleitet und strömt entgegen der Ansaugrichtung im zweiten Zwischenraum 10 zurück (Pfeil 2.4). Am Ende des Zwischenraumes 10 gelangt die Luft durch die Fenster 6 in das erste Innenrohr und strömt gemäß Pfeil 2.5. Gemäß der Figur 2 ist somit ein Durchströmungsweg gestaltet, der von außen nach innen die Länge des Rohrstücks 1 dreimal durchmißt.

Nach der Umschaltung vom 6-Zylinder auf den 3-Zylinder-Betrieb hat das bewegliche zweite Innenrohr 4 erfindungsgemäß die linke Anschlagstellung gemäß Figur 2 eingenommen. Der Durchströmungsweg ist jetzt 3*L, der Strömungsquerschnitt ist A. Die Querschnitts-Drittelung und die Strömungsweg-Verdreifachung kann als neutral bezüglich des Durchströmungswiderstandes angesehen werden, da mit der Umschaltung auf den Strömungsweg nach Figur 2 gleichzeitig ein Motorbetriebszustand eingestellt wird, der wegen der geringen Leistungsforderung eine entsprechend geringen Luftvolumenstrom erzeugt.

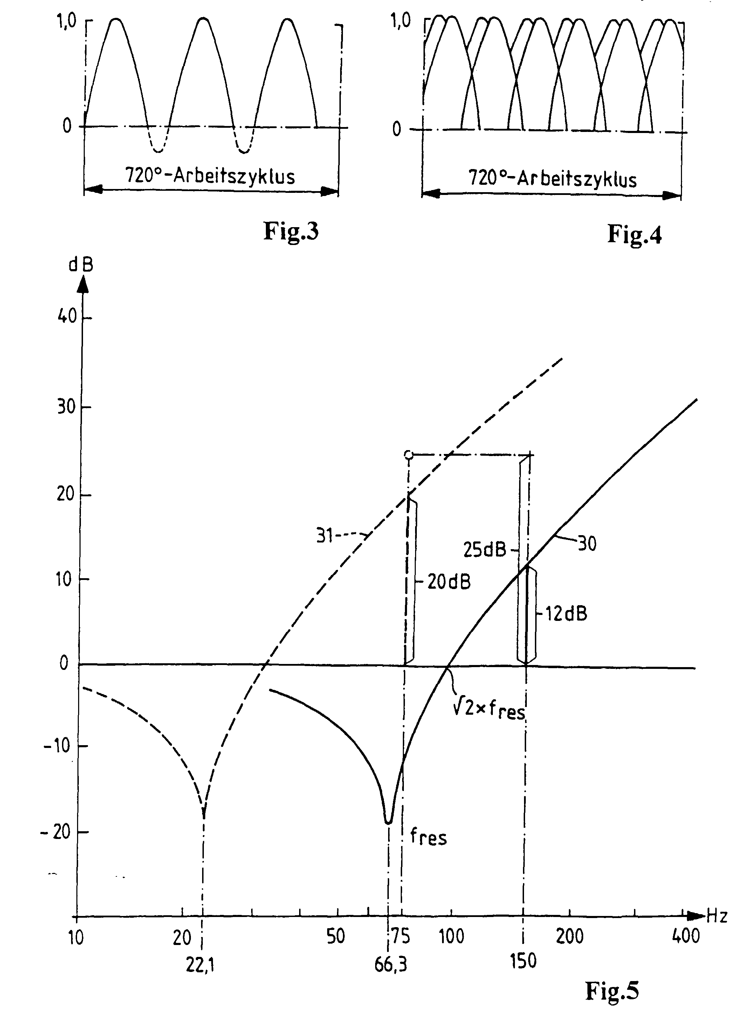

Anhand der Figuren 3 bis 5 wird das Dämpfungsverhalten der Ansaugvorrichtung nach dem oben beschriebenen Ausführungsbeispiel erläutert.

In der Figur 3 ist der Zeitablauf der Pulsfolgen des Saugpulses beim 3-Zylinder-Betrieb und in der Figur 4 beim 6-Zylinder-Betrieb dargestellt. Der Zyklus des 6-Zylinder-Motors nach Figur 4 zeigt das Zusammenwirken der Sinusschwingungen der 6. und 12. Harmonischen eines 720° Arbeitszyklusses, wobei erkennbar ist, dass die Amplituden der resultierenden Schwingung deutlich kleiner als die des Einzelpulses sind. Im Gegensatz dazu schwingt der 3-Zylinder-Zyklus nach Figur 3 fast ausschließlich mit der Sinusschwingung der 3. Harmonischen und die Amplitude wächst dabei über den Wert des Einzelpulses hinaus. Bei einer Motordrehzahl von z.B. 3000 U/min ergibt sich beim 6-Zylinder-Betrieb eine störende Frequenz von 150Hz, beim 3-Zylinder-Betrieb beträgt diese 75Hz.

Es ergibt sich rein rechnerisch beim Übergang vom 6-Zylinder-Betrieb auf den 3-Zylinder-Betrieb ein Amplitudenverhältnis von 1:4,5, was beim Geräusch einen Pegelunterschied von 13dB ausmacht.

In Figur 5 sind Verläufe der Dämpfung über der Frequenz bei den beiden Betriebszuständen dargestellt. In der Kurve 30 ist der Dämpfungsverlauf beim 6-Zylinder-Betrieb und in der Kurve 31 ist der Dämpfungsverlauf beim 3-Zylinder-Betrieb gezeigt.

Bei einer Optimierung des Dämpfungsverhaltens ist zu beachten, dass neben der Größe des Volumens die Abmessungen des akustischen Halses für die Dämpfungswirkung entscheidend sind. Je enger und je länger ein Rohrstück ist, desto niederfrequenter setzt die Dämpfung ein. Ziel der akustischen Bemühung muss es sein, mit der Resonanzfrequenz $f_{res}$ unter die Anregungsfrequenz zu kommen, weil erst ab dem Wert $\sqrt{2} * f_{res}$ die erwünschte Dämpfung einsetzt.

Daraus ergibt sich die Konsequenz, dass beim Wechsel vom 6-Zylinder-Betrieb auf den 3-Zylinder-Betrieb die Resonanzfrequenz des dämpfenden Rohrstücks 1 um den Faktor 3,77 kleiner werden muss, wenn keine Erhöhung des Schallpegels hingenommen werden soll. Dies wiederum erzwingt Änderungen der Abmessungen des Dämpfungshalses, bzw. der Länge und der Querschnittsfläche mit einem Gesamt-Wirkungsfaktor von 14,22. Wie die Figur 5 zeigt, wäre bei diesem angenommenen Auslegungsfall des 6-Zylinder-Betriebes die Resonanzfrequenz 66Hz, die Dämpfung betrüge bei 150Hz dann 12dB (Kurve 20). Nach der Umschaltung auf 3-Zylinder-Betrieb wäre die Anregungsfrequenz 75Hz und die Dämpfung müsste wegen der um 13dB stärkeren Anregung 25 dB betragen.

Mit der Ansaugvorrichtung nach dem Ausführungsbeispiel wird erreicht, dass die akustisch bewerteten Pegel eingehalten werden, da der 75Hz-Ton um 9,5 dB(A) schwächer bewertet wird als der 150Hz-Ton. Dabei reicht eine Abstimmung auf die Resonanzfrequenz von 22Hz aus, was eine um den Faktor 3 geminderte Frequenz darstellt. Der nun auftretende 75Hz-Ton wird mit 20dB gedämpft (Kurve 21). Das erfindungsgemäße Ausführungsbeispiel nach den Figuren 1 und 2 ermöglicht somit eine Verdreifachung der Länge des Dämpferhalses und eine Drittelung des Flächenquerschnitts und führt damit zu dem gewünschten Erfolg.

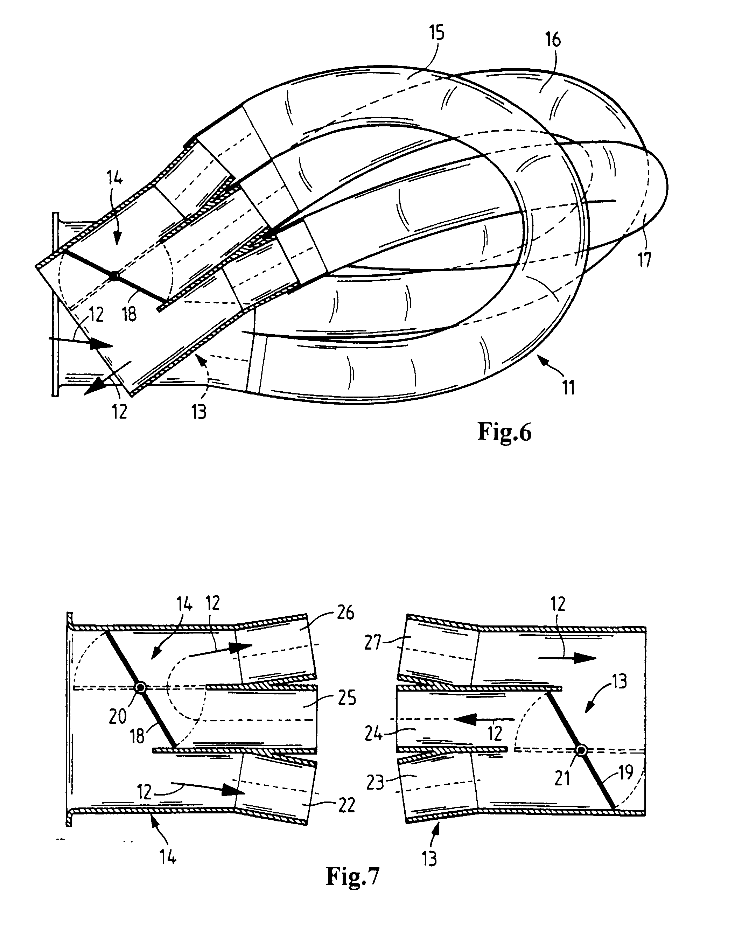

In Figur 6 ist ein weiteres bevorzugtes Ausführungsbeispiel 11 der erfindungsgemäßen Luftdurchströmungsvorrichtung gezeigt, durch die Luft gemäß der Pfeile 12 strömt. Zwischen zwei Stellvorrichtungen 13 und 14 sind Strömungskanäle 15, 16 und 17 angeordnet, wobei die Strömungsrichtung in den Strömungskanälen 15, 16 und 17 durch Klappen 18 und 19 (hier nicht sichtbar) veränderbar ist. Die Strömungskanäle 15, 16 und 17 bestehen vorzugsweise aus flexiblen Material, so dass diese Luftdurchströmungsvorrichtung 11 auch an Stellen an einem Aggregat (beispielsweise im Motorraum eines Kraftfahrzeuges) untergebracht werden kann, an denen nicht viel Bauraum zur Verfügung steht.

In Figur 7 sind die Stellvorrichtungen 13 und 14 mit den Klappen 18 und 19 im Einzelnen gezeigt. Die Klappen 18 und 19 sind um Klappenachsen 20 und 21 drehbar, wobei diese Klappenachsen 20 und 21 auch mechanisch miteinander gekoppelt sein können, wie es aus der Figur 6 im Prinzip entnehmbar ist.

Bei einer Stellung der Klappe 18 in der in der Figur 6 dargestellten Lage in der Stellvorrichtung 14 wird der Luftstrom gemäß der Pfeile 12 durch eine untere Öffnung 22 in den Strömungskanal 15 (vgl. Figur 6) und dann in eine Öffnung 23 der Stellvorrichtung 13 geleitet. Durch die Stellung der Klappe 19 in der Stellvorrichtung 13 wird die Luft weiterhin durch eine Öffnung 24 in den Strömungskanal 16 geleitet und erreicht somit eine Öffnung 25 der Stellvorrichtung 14. Auch hier wird die Luft durch die Stellung der Klappe 18 über eine Öffnung 26 in den Strömungskanal 17 zurück geleitet und erreicht über eine Öffnung 27 die Stellvorrichtung 13, welche nach außen durchströmt werden kann.

Bei dem oben beschriebenen Strömungsweg handelt es sich somit um eine Hintereinanderschaltung der Strömungskanäle 15, 16 und 17 wodurch sich ein langer schmaler dämpfungswirksamer Strömungsweg ergibt.

Bei der anderen Stellung der Klappen 18 und 19, im jeweils geöffneten Zustand hier punktiert dargestellt, sind alle Öffnungen der Stellglieder 13 und 14 frei, so dass die Luft parallel durch alle Strömungskanäle 15, 16 und 17 strömen kann. Es ergibt sich somit ein kurzer breiter Strömungsweg durch die Strömungskanäle 15, 16 und 17.

Die Achsen 20 und 21 der Klappen 18 und 19 sind beim Ausführungsbeispiel mechanisch miteinander gekoppelt, so dass in der Regel beide Klappen parallel miteinander verstellt werden und angetrieben von einem Stellmotor die gleiche Stellung in der jeweiligen Stellvorrichtung 13 oder 14 einnehmen. Durch hier nicht dargestellte Mitnahmenocken an einer der jeweils direkt angetriebenen oder indirekt mitgeführten Klappenachse 20 oder 21 kann die jeweils indirekt mitgeführte Klappe 18 oder 19 in einem bestimmten Drehwinkelbereich in der Ausgangsstellung verharren, so dass sich hier eine weitere Schaltstellung ergibt.

Bei dieser letztgenannten Schaltstellung wird nur einer der Strömungskanäle 15, 16 oder 17 durchströmt, so dass sich aus der zuerst beschriebenen Schaltstellung heraus eine Verkürzung der Länge des Strömungsweges um den Faktor 3 bei gleichem Querschnitt ergibt. Bei einem Weiterdrehen der jeweils angetriebenen Achse ergibt sich durch die Wirkung der Mitnahmenocke dann die Schaltstellung mit einer Parallelströmung.

Bezugszeichenliste

| | | |
|---|---|---|
| 1 = | | Rohrstück |
| 2 = | | Pfeil (Luftströmung) |
| 2.0 bis 2.5 = | | Pfeile (Teil-Luftströmungen) |
| 3 = | | erstes Innenrohr |
| 4 = | | zweites Innenrohr |
| 5 = | | Anschlagplatte |
| 6,7 = | | Fenster |
| 8 = | | Dichtungsscheibe |
| 9,10 = | | Zwischenräume |
| 11 = | | Ausführungsbeispiel mit flex. Strömungskanälen |
| 12 = | | Pfeil (Luftströmung) |
| 13,14 = | | Stellvorrichtungen |
| 15,16,17 = | | Strömungskanäle |
| 18,19 = | | Klappen |
| 20,21 = | | Klappenachsen |
| 22 bis 27 = | | Öffnungen in den Stellvorrichtungen |
| . . | | |
| 30,31 = | | Kurven des Dämpfungsverlaufs |

**Patentansprüche**

1. Luftansauganlage für ein nachgeschaltetes Aggregat,

- bei der im Bereich des Ansaugweges Stellvorrichtungen (13, 14) zur Veränderung der Durchströmungsgeometrie für die durchströmende Luft vorhanden sind,

- der Gesamtquerschnitt des Strömungsweges in Strömungsrichtung in einzelne Strömungskanäle (15, 16, 17) aufgeteilt ist und mit den Stellvorrichtungen (13, 14) die Strömungswege in den einzelnen Strömungskanälen (15, 16, 17) zur Beeinflussung der wirksamen Länge und des wirksamen Querschnitts der gesamten Luftansauganlage steuerbar sind,

- wobei durch Umlenkung des Luftstromes entweder ein langer oder ein kurzer Strömungsweg geschaffen werden kann, **dadurch gekennzeichnet, dass**

- mindestens drei Strömungskanäle (15, 16, 17) vorhanden sind, die mit ihren Enden an jeweils eine innere Öffnung (22 bis 27) der Stellvorrichtung (13, 14) angeschlossen sind und dass

- in jeder der Stellvorrichtungen (13, 14) Klappen (18, 19) vorhanden sind, die in einer ersten Schaltstellung den Luftstrom (12) vom Eingang an der ersten Stellvorrichtung (13) durch die Strömungskanäle (15, 16, 17) in wechselnder Strömungsrichtung hintereinander zum Ausgang an der zweiten Stellvorrichtung (14) führen und
in einer zweiten Schaltstellung den Luftstrom (12) vom Eingang an der ersten Stellvorrichtung (13) durch die Strömungskanäle (15, 16, 17) parallel zum Ausgang an der zweiten Stellvorrichtung (14) führen.

2. Luftansauganlage nach Anspruch 1, dadurch gekennzeichnet, dass die Klappen (18, 19) jeweils an einer Achse (20, 21) drehbar gelagert sind, wobei mit den Klappen (18, 19) in der ersten Schaltstellung alle drei Strömungskanäle parallel durchströmbar sind und mit den Klappen (18, 19) in der zweiten Schaltstellung jeweils zwei Öffnungen (25, 26; 23, 24) der Stellvorrichtungen (13, 14) derart verschlossen werden, dass sie zum Eingang oder zum Ausgang hin verschlossen sind, jedoch eine Luftströmung zwischen diesen Öffnungen (25, 26; 23, 24) auf den Strömungskanälen (15, 16, 17) zugewandten Seite möglich ist.

3. Luftansauganlage nach Anspruch 2, dadurch gekennzeichnet, dass die Achsen (20, 21) der beiden Klappen (18, 19) starr miteinander verbunden sind und von einem Stellmotor gemeinsam angetrieben werden.

4. Luftansauganlage nach Anspruch 2, dadurch gekennzeichnet, dass die Achsen (20, 21) der beiden Klappen (18, 19) von einem Stellmotor gemeinsam angetrieben werden und derart miteinander verbunden sind, dass die direkt angetriebene Achse oder die indirekt mitgeführte Achse (20, 21) einen Mitnahmenocken aufweist, so dass in einem bestimmten Drehwinkelbereich nur die direkt angetriebene Achse (20, 21) zu einer Klappenverstellung führt.

5. Luftansauganlage als Ansaugvorrichtung für einen Verbrennungsmotor, bei der im Bereich des Ansaugweges Mittel zur Veränderung der Durchströmungsgeometrie für die angesaugte Luft vorhanden sind, dadurch gekennzeichnet, dass im Ansaugweg ein Rohrstück (1) mit mindestens zwei Innenrohren (3, 4) versehen ist, wobei deren Durchmesser so bemessen sind, dass das erste (3) und das zweite Innenrohr (4) im Rohrstück (1) ineinander verschiebbar sind und dass Mittel zur Veränderung des Ansaugweges im Rohrstück (1) vorhanden sind, mittels denen die Luft entweder das Rohrstück (1) mit den Innenrohren (3, 4) parallel durchströmt oder durch die in wechselnder Richtung hintereinander geschalteten Zwischenräume (9, 10) des Rohrstückes (1) und der Innenrohre (3, 4) sowie durch das Innerste der Innenrohre (3) gelangt.

6. Luftansauganlage nach Anspruch 5, dadurch gekennzeichnet, dass das erste Innenrohr (3) fest im Rohrstück (1) verankert ist, wobei mindestens ein Fenster (6) zum Einströmen der Luft in das erste Innenrohr (3) vorhanden ist und dass das zweite Innenrohr (4) im Rohrstück (1) mit Öffnungen (7) und Dichtelementen (8) derart über das erste Innenrohr (3) verschiebbar ist, dass in der Ausgangslage die Luft parallel durch alle Zwischenräume (9, 10) und das erste Innenrohr (3) strömt und in der Umschaltlage sich die Hintereinanderschaltung folgender Ansaugwege ergibt:

   In Ansaugrichtung durchströmt die Luft einen ersten Zwischenraum (9) zwischen dem Rohrstück (1) und dem zweiten Innenrohr (4),
   am Ende dieses Zwischenraumes (9) strömt die Luft in entgegengesetzte Richtung durch den Zwischenraum (10) zwischen dem ersten (3) und dem zweiten Innenrohr (4) und
   am Ende des zweiten Zwischenraumes (10) gelangt die Luft in das erste Innenrohr (3) und strömt in Ansaugrichtung (2) aus dem Rohrstück (1) hinaus.

7. Luftansauganlage nach Anspruch 6, dadurch gekennzeichnet, dass in der Umschaltlage durch das mindestens eine Fenster (6) im ersten Innenrohr (3) ein Verbindungsweg vom Zwischenraum (10) zum Austrittskanal über das anströmseitige Ende des zweiten Innenrohrs (4) gestaltet ist, dass das zweite Innenrohr (4) mindestens ein Fenster (7) aufweist zur Verbindung des ersten (9) und des zweiten Zwischenraums (10) und dass am anderen Ende des verschiebbaren zweiten Innenrohres (4) ein Dichtring (8) zur Abdichtung beider Zwischenräume (9, 10) nach außen vorhanden ist.

8. Luftansauganlage nach Anspruch 6 oder 7, dadurch gekennzeichnet, dass eine Anschlagplatte (5) vorhanden ist, in deren Bereich sich Öffnungen für die Luft (2) im Ansaugweg befinden und die ferner den Anschlag für das eine Ende des zweiten verschiebbaren Innenrohres (4) in der Umschaltlage bildet und an der das erste feste Innenrohr (3) gehalten ist.

9. Luftansauganlage nach einem der Ansprüche 6 bis 8, dadurch gekennzeichnet, dass das zweite Innenrohr (4) an Stützelementen verschiebbar ist, die außen auf dem ersten festen Innenrohr (3) angebracht sind.

10. Luftansauganlage nach einem der Ansprüche 6 bis 9, dadurch gekennzeichnet, dass das zweite Innenrohr (4) an Stützelementen verschiebbar ist, die innen am Rohrstück (1) angebracht sind.

11. Luftansauganlage nach einem der Ansprüche 6 bis 10, dadurch gekennzeichnet, dass die für die Verschiebung des zweiten Innenrohres (4) notwendigen Schaltimpulse vom Hydrauliksystem eines Kraftfahrzeuges in Abhängigkeit von der aktiven Zylinderzahl des Verbrennungsmotors erzeugt werden.

12. Luftansauganlage nach einem der Ansprüche 1 bis 4, dadurch gekennzeichnet, dass es sich um eine Ansaugvorrichtung für einen Verbrennungsmotor eines Kraftfahrzeuges handelt.

13. Luftansauganlage nach Anspruch 12, dadurch gekennzeichnet, dass das Kraftfahrzeug eine Vorrichtung zur Abschaltung von einem Teil der Zylinder des Verbrennungsmotors aufweist.

**Claims**

1. Air intake system for an assembly connected downstream thereof,

   - wherein adjusters (13. 14) for changing the throughflow geometry for the traversing air are provided in the region of the intake path,

   - the total cross-section of the flow path is divided into individual flow channels (15, 16, 17), when viewed with respect to the flow direction, and the flow paths in the individual flow channels (15, 16, 17) are controllable by the adjusters (13, 14) to influence the effective length and the effective cross-section of the entire air intake system,

   - either a long or a short flow path being creatable by deflecting the air flow,

   characterised in that

   - at least three flow channels (15, 16, 17) are provided, which each communicate by their ends with an internal aperture (22 to 27) of the adjusters (13, 14), and in that

   - in each of the adjusters (13, 14) are provided flaps (18, 19) which, in a first switching position, guide the air flow (12) from the inlet of the first adjuster (13) through the flow channels (15, 16, 17) consecutively in an alternating flow direction to the outlet of the second adjuster (14), and

   - guide, in a second switching position, the air flow (12) from the inlet of the first adjuster (13) through the flow channels (15, 16, 17) parallel to the outlet of the second adjuster (14).

2. Air intake system according to claim 1, characterised in that the flaps (18, 19) are each rotatably mounted on a spindle (20, 21), all three flow channels being traversable in parallel with the flaps (18, 19) in the first switching position, and two apertures (25, 26; 23, 24) at a time in the adjusters (13, 14) being closed by the flaps (18, 19) in the second switching position in such a manner that they are closed towards the inlet or towards the outlet, but an air flow is possible between these apertures (25, 26; 23, 24) on the side facing the flow channels (15, 16, 17).

3. Air intake system according to claim 2, characterised in that the spindles (20, 21) of the two flaps (18, 19) are rigidly interconnected and driven jointly by a setting motor.

4. Air intake system according to claim 2, characterised in that the spindles (20, 21) of the two flaps (18, 19) are driven jointly by a setting motor and are interconnected in such a manner that the directly driven spindle or the indirectly entrained spindle (20, 21) includes an entrainment cam, so that only the directly driven spindle (20, 21) leads to a flap displacement within a specific range of rotational angles.

**5.** Air intake system serving as the intake device for an internal combustion engine, wherein means for changing the throughflow geometry for the drawn-in air are provided in the region of the intake path, characterised in that a tubular part (1) with at least two internal tubes (3, 4) is provided in the intake path, the diameters of said internal tubes being so dimensioned that the first internal tube (3) and the second internal tube (4) in the tubular part (1) are displaceable in each other, and in that means for changing the intake path are provided in the tubular part (1), by means of which means the air either flows parallel through the tubular part (1) with the internal tubes (3, 4) or passes through the gaps (9, 10) in the tubular part (1) and in the internal tubes (3, 4), which gaps are incorporated consecutively in an alternating direction, and passes through the innermost of the internal tubes (3).

**6.** Air intake system according to claim 5, characterised in that the first internal tube (3) is securely anchored in the tubular part (1), at least one window (6) being provided for the air to flow into the first internal tube (3), and in that the second internal tube (4) in the tubular part (1), provided with apertures (7) and sealing elements (8), is displaceable in such a manner over the first internal tube (3) that, in the initial position, the air flows parallel through all of the gaps (9, 10) and through the first internal tube (3) and, in the switchover position, the series-connection of the following intake paths is established:

In the intake direction, the air traverses a first gap (9) between the tubular part (1) and the second internal tube (4),
the air flows in the opposite direction through the gap (10) between the first internal tube (3) and the second internal tube (4) at the end of this gap (9), and
the air passes into the first internal tube (3) at the end of the second gap (10) and flows from the tubular part (1) in the intake direction (2).

**7.** Air intake system according to claim 6, characterised in that, in the switchover position, a connection path from the gap (10) to the outlet duct via the end of the second internal tube (4) at the inflow side is formed by at least one window (6) in the first internal tube (3), in that the second internal tube (4) includes at least one window (7) for connecting the first gap (9) and the second gap (10), and in that a sealing ring (8) for sealing both gaps (9, 10) outwardly is provided on the other end of the displaceable second internal tube (4).

**8.** Air intake system according to claim 6 or 7, characterised in that a stop plate (5) is provided, in the region of which are situated apertures for the air (2) in the intake path, and which plate also forms the stop for one end of the second displaceable internal tube (4) in the switchover position, and on which plate is retained the first fixed internal tube (3).

**9.** Air intake system according to one of claims 6 to 8, characterised in that the second internal tube (4) is displaceable on supporting elements which are mounted externally on the first fixed internal tube (3).

**10.** Air intake system according to one of claims 6 to 9, characterised in that the second internal tube (4) is displaceable on supporting elements which are mounted internally on the tubular part (1).

**11.** Air intake system according to one of claims 6 to 10, characterised in that the switching pulses, which are necessary for the displacement of the second internal tube (4), are generated by the hydraulic system of an automotive vehicle in dependence on the number of active cylinders of the internal combustion engine.

**12.** Air intake system according to one of claims 1 to 4, characterised in that it is an intake device for an internal combustion engine of an automotive vehicle.

**13.** Air intake system according to claim 12, characterised in that the automotive vehicle includes a device for switching-off some of the cylinders of the internal combustion engine.

**Revendications**

**1.** Installation d'aspiration d'air pour un équipement en aval, dans laquelle,

- dans la zone du chemin d'aspiration, il y a des dispositifs de réglage (13, 14) pour modifier la géométrie d'écoulement de l'air,
- la section d'ensemble du chemin d'écoulement est subdivisée dans la direction d'écoulement en différents canaux (15, 16, 17) individuels et les dispositifs de réglage (13, 14) commandent les chemins d'écoulement dans les différents canaux (15, 16, 17) pour influencer la longueur active et la section active de l'ensemble de l'installation d'aspiration d'air,
- en déviant le flux d'air on crée un chemin d'écoulement plus long ou plus court,

caractérisée en ce que

- au moins trois canaux (15, 16, 17) sont prévus dont les extrémités sont raccordées chaque fois à une ouverture intérieure (22-27) du dispositif de réglage (13, 14), et

- dans chacun des dispositifs de réglage (13, 14) il y a des volets (18, 19) qui, dans une première position de commutation, dirigent le flux d'air (12) de l'entrée du premier dispositif de réglage (13) à travers les canaux (15, 16, 17), selon une direction d'écoulement alternée, successivement vers la sortie du second dispositif de réglage (14), et qui dans une seconde position de commutation, dirigent le flux d'air (12) de l'entrée du premier dispositif de réglage (13) à travers les canaux (15, 16, 17) en parallèle vers la sortie du second dispositif de réglage (14).

**2.** Installation d'aspiration d'air selon la revendication 1,
caractérisée en ce que

- les volets (18, 19) sont montés pivotants chaque fois sur un axe (20, 21),
- dans la première position de commutation, les volets (18, 19) assurent le passage en parallèle dans trois canaux et,
- lorsque les volets (18, 19) occupent la seconde position de commutation, chaque fois deux ouvertures (25, 26 ; 23, 24) des dispositifs de réglage (13, 14) sont fermées vers l'entrée ou vers la sortie mais pour permettre néanmoins un passage d'air entre les ouvertures (25, 26 ; 23, 24) du côté tourné vers les canaux (15, 16, 17).

**3.** Installation d'aspiration d'air selon la revendication 2,
caractérisée en ce que
les axes (20, 21) des deux volets (18, 19) sont reliés rigidement et sont entraînés en commun par un actionneur unique.

**4.** Installation d'aspiration d'air selon la revendication 2,
caractérisée en ce que
les axes (20, 21) des deux volets (18,19) sont entraînés en commun par un actionneur et sont reliés pour que l'axe entraîné directement ou l'axe (20, 21) mené indirectement comporte une came d'entraînement pour que dans une plage d'angle de rotation définie, seul l'axe directement entraîné (20, 21) règle un volet.

**5.** Installation d'aspiration d'air comme dispositif d'aspiration d'un moteur à combustion interne comportant dans la zone du chemin d'aspiration, les moyens pour modifier la géométrie de l'écoulement d'air aspiré,
caractérisée en ce que

- le chemin d'aspiration comporte un élément de tuyau (1) avec au moins deux tubes intérieurs (3, 4),
- leur diamètre est choisi pour que le premier (3) et le second tube intérieur (4) puissent coulisser l'un dans l'autre dans l'élément de tuyau (1) et
- des moyens sont prévus pour modifier le chemin d'aspiration dans l'élément de tuyau (1), pour permettre à l'air soit de passer en parallèle l'élément de tuyau (1) et les tubes intérieurs (3, 4), soit de passer dans des directions alternées, à travers les intervalles (9, 10) branchés en série de l'élément de tuyau (1) et des tubes intérieurs (3, 4), ainsi qu'à travers le tube (3) le plus à l'intérieur.

**6.** Installation d'aspiration d'air selon la revendication 5,
caractérisée en ce que

- le premier tube intérieur (3) est accroché solidairement dans l'élément de tube (1), au moins une fenêtre (6) étant prévue pour l'entrée de l'air dans le premier tuyau intérieur (3) et,
- le second tuyau intérieur (4) est coulissant dans le tube (1) avec des ouvertures (7) et des éléments d'étanchéité (8) par-dessus le premier tube intérieur (3), pour qu'en position de repos, l'air puisse passer en parallèle à travers les intervalles (9, 10) et le premier tube intérieur (3), et qu'en position de commutation, les chemins d'aspiration soient branchés en série :
- dans la direction d'aspiration, l'air passe dans un premier intervalle (9) entre l'élément de tuyau (1) et le second tube intérieur (4),
- à l'extrémité de cet intervalle (9), l'air passe dans la direction opposée à travers l'intervalle (10) entre le premier et le second tube intérieur (3, 4) et,
- à l'extrémité du second intervalle (10), l'air arrive dans le premier tube intérieur (3) et sort de l'élément de tuyau (1) dans la direction d'aspiration (2).

**7.** Installation d'aspiration d'air selon la revendication 6,
caractérisée en ce qu'

- en position de commutation, à travers au moins une fenêtre (6) dans le premier tube intérieur (3), on a un chemin de communication entre l'intervalle (10) et le canal de sortie par l'extrémité amont du second tube intérieur (4),
- le second tube intérieur (4) comporte au moins une fenêtre (7) pour relier le premier intervalle (9) et le second intervalle (10) et,
- à l'autre extrémité du second tube intérieur (4), coulissant, il est prévu un joint (8) pour assurer l'étanchéité des deux intervalles (9, 10) vers l'extérieur.

8. Installation d'aspiration d'air selon la revendication 6 ou 7
caractérisée en ce qu'
une plaque de butée (5), au niveau de laquelle il y a des ouvertures pour l'air (2) dans le chemin d'aspiration, forme en outre la butée pour une extrémité du second tube intérieur (4), coulissant en position de commutation, et le premier tube intérieur (3), fixe, est fixé sur cette plaque de butée.

9. Installation d'aspiration d'air selon l'une des revendications 6 à 8,
caractérisée en ce que
le second tube intérieur (4) est coulissant sur des éléments de support prévus à l'extérieur du premier tube intérieur fixe (3) .

10. Installation d'aspiration d'air selon l'une des revendications 6 à 9,
caractérisée en ce que
le second tube intérieur (4) est coulissant contre des éléments de support prévus à l'intérieur sur l'élément de support (1).

11. Installation d'aspiration d'air selon l'une des revendications 6 à 10,
caractérisée en ce que
les impulsions de commutation nécessaires au glissement du second tube intérieur (4) sont générées par un système hydraulique d'un véhicule automobile en fonction du nombre de cylindres actifs du moteur à combustion interne.

12. Installation d'aspiration d'air selon l'une des revendications 1 à 4,
caractérisée en ce que
l'installation est un dispositif d'aspiration d'un moteur à combustion interne d'un véhicule automobile.

13. Installation d'aspiration d'air selon la revendication 12,
caractérisée en ce que
le véhicule automobile comporte un dispositif pour couper une partie des cylindres du moteur à combustion interne.

**Fig.1**

**Fig.2**

720°-Arbeitszyklus

**Fig.3**

720°-Arbeitszyklus

**Fig.4**

**Fig.5**

**Fig.6**

**Fig.7**